# EUROPÄISCHE PATENTSCHRIFT

(11) **EP 1 738 134 B1**
(45) Veröffentlichungstag und Bekanntmachung des Hinweises auf die Patenterteilung: **16.07.2008**
(21) Anmeldenummer: 05731659.8
(22) Anmeldetag: 24.03.2005
(51) Int. Cl.: G01B 5/008

(54) **KOORDINATENMESSGERÄT ZUM MESSTECHNISCHEN BESTIMMEN EINER KOORDINATE AN EINEM MESSOBJEKT**
CO-ORDINATE MEASUREMENT APPLIANCE FOR MEASURING THE CO-ORDINATES OF TEST OBJECTS
APPAREIL DE MESURE DE COORDONNEES SERVANT A DETERMINER UNE COORDONNEE SUR UN OBJET DE MESURE PAR UNE TECHNIQUE DE MESURE

(30) Priorität: 19.04.2004 DE 102004020996
(43) Veröffentlichungstag der Anmeldung: 03.01.2007
(73) Patentinhaber: Carl Zeiss Industrielle Messtechnik GmbH, 73447 Oberkochen (DE)
(72) Erfinder: SEITZ, Karl, 73447 Oberkochen (DE); STRAUSS, Wolfgang, 89195 Staig (DE); ROTH, Roland, 73550 Waldstetten (DE); DOMINICUS, Walter, 89551 Königsbronn (DE)
(74) Vertreter: Duhme, Torsten
(86) Internationale Anmeldenummer: PCT/EP2005/003133
(87) Internationale Veröffentlichungsnummer: WO 2005/100906

(56) Entgegenhaltungen:
- US-A- 4 630 374
- US-A- 4 651 439
- US-A- 4 845 855
- US-A- 5 257 461
- MARC VERMEULEN: "High-Precision 3D-Coordinate Measuring Machine, Design and Prototype Development" 1999, TECHNISCHE UNIVERSITEIT EINDHOVEN , EINDHOVEN , XP002334308 Seite 145 - Seite 206; Abbildungen 5.1-5.25

## Beschreibung

Die vorliegende Erfindung betrifft ein Koordinatenmessgerät zum messtechnischen Bestimmen einer Messkoordinate an einem Messobjekt, mit
- einem Tisch zum Aufspannen des Messobjekts,
- einem Sondenhalter zum Aufnehmen einer Messsonde, insbesondere eines Tastkopfes,
- einem ersten Lagerbock mit einer oberen Führungsfläche und zwei senkrechten Führungsflächen, auf denen ein erster Schlitten in einer ersten Richtung längsverschieblich gelagert ist,
- einem zweiten Lagerbock mit einer oberen Führungsfläche und zwei senkrechten Führungsflächen, auf denen ein zweiter Schlitten in einer zweiten Richtung längsverschieblich gelagert ist, und
- einem ersten und einem zweiten Balken, die jeweils mit dem Sondenhalter gekoppelt sind,
- wobei der erste Balken parallel zu dem zweiten Lagerbock verläuft und an dem ersten Schlitten in der zweiten Richtung längsverschieblich angeordnet ist, und
- wobei der zweite Balken parallel zu dem ersten Lagerbock verläuft und an dem zweiten Schlitten in der ersten Richtung längsverschieblich angeordnet ist.

Ein solches Koordinatenmessgerät ist aus der Dissertation "High-Precision 3D-Coordinate Measuring Machine" von Marc Vermeulen bekannt, die in der Technischen Universität Eindhoven hinterlegt und unter der ISBN-Nummer 90-386-2631-2 erhältlich ist. Die Dissertation ist ferner im Internet unter der Adresse *http:*//*alexandria.tue.nl*/*extra2*/*9902695.pdf* zu finden.

Gattungsgemäße Koordinatenmessgeräte werden u.a. dazu verwendet, die Objektform eines Messobjekts mit großer Genauigkeit zu vermessen. Beispielsweise wird damit die Objektform von maschinell hergestellten Werkstücken zur Qualitätskontrolle überprüft. Typischerweise wird als Messsonde ein Tastkopf mit einem beweglich gelagerten Taststift verwendet, der über eine geeignete Verschiebemechanik des Koordinatenmessgerätes so weit an das Messobjekt herangefahren wird, bis der Taststift den gewünschten Messpunkt am Messobjekt berührt. Anschließend kann aus der Stellung des Tastkopfes und der relativen Lage des Taststiftes zum Tastkopf die Raumkoordinate des angetasteten Messpunktes bestimmt werden. Die Erfindung ist jedoch nicht auf Koordinatenmessgeräte mit taktilen Tastköpfen beschränkt und kann gleichermaßen bei Koordinatenmessgeräten mit anderen Messsonden, beispielsweise optischen Messsonden, verwendet werden.

Für die Verschiebemechaniken sind unterschiedliche Konzepte bekannt. Bei dreidimensional messenden Geräten (3D-Koordinatenmessgeräte) sind typische Konzepte die Portalbauweise, Horizontalarm-Koordinatenmessgeräte und Koordinatenmessgeräte mit Ständerkonstruktion. Koordinatenmessgeräte in Portalbauweise besitzen ein in X-Richtung verschiebliches Portal mit einem Querträger, an dem ein in Y-Richtung verschieblicher Schlitten angeordnet ist. Der Y-Schlitten trägt seinerseits eine in Z-Richtung verschiebliche Pinole. Ein derartiges Koordinatenmessgerät ist beispielsweise aus DE 101 24 493 A1 bekannt.

Horizontalarm-Koordinatenmessgeräte besitzen eine in X-Richtung verschiebliche Säule, an der ein in Z-Richtung verschieblicher Schlitten angeordnet ist. Der Z-Schlitten trägt einen in Y-Richtung verstellbaren Arm, dessen freies Ende den Tastkopf trägt.

Koordinatenmessgeräte in Ständerbauweise besitzen einen Ständer, der die in Z-Richtung verschiebliche Pinole trägt. Der Ständer kann selbst in X- und/oder Y-Richtung beweglich sein. Alternativ können die X- und Y-Führungsachsen auch durch einen entsprechend verschieblichen Tisch zum Aufspannen des Messobjekts realisiert sein.

Die bekannten Konzepte besitzen jeweils bauartbedingte Vor- und Nachteile, insbesondere in Bezug auf die Zugänglichkeit des Messvolumens und die Anfälligkeit gegenüber statischen und dynamischen Verformungen und daraus resultierenden Messfehlern. Wie leicht nachzuvollziehen ist, verformt sich beispielsweise der frei tragende horizontale Arm bei einem Horizontalarm-Koordinatenmessgerät abhängig von der Y-Position des Tastkopfes unter dem Einfluss der Schwerkraft.

In der oben genannten Dissertation wird ein Koordinatenmessgerät mit einer neuen Verschiebemechanik vorgeschlagen, die es ermöglicht, zumindest einige Fehlerquellen aufgrund statischer und dynamischer Verformungen zu eliminieren, so dass die Messgenauigkeit gesteigert werden kann. Im Grundsatz besitzt das vorgeschlagene Koordinatenmessgerät zwei V-förmig zueinander angeordnete Lagerböcke als Linearführungen für die X- und Y-Richtung. Jeder Lagerbock trägt einen längsverschieblichen Schlitten, an dem ein senkrecht zum Lagerbock verschieblicher Balken angeordnet ist. Die beiden Balken sind wiederum V-förmig zueinander angeordnet, wobei der erste Balken etwa parallel zum zweiten Lagerbock verläuft und umgekehrt. Die aufeinander zu weisenden, freien Enden der Balken sind mit einer Plattform verbunden, die somit in X- und Y-Richtung verschieblich ist eine in Z-Richtung verschiebliche Pinole trägt. Praktische Versuche mit dem vorgestellten Koordinatenmessgerät haben gezeigt, dass mit einer solchen Verschiebemechanik erheblich höhere Messgenauigkeiten erreichbar sind als mit den bislang bekannten Bauweisen. Wenngleich der veränderte Aufbau der Verschiebemechanik bereits einige Fehlerquellen eliminiert bzw. deren Auswirkung reduziert, verbleibt der Wunsch, noch höhere Messgenauigkeiten zu erreichen.

Aus US 5,257,461 ist ein Koordinatenmessgerät in Portalbauweise bekannt. Diese Druckschrift offenbart verschiedene Details, wie bewegliche Schlitten an einem solchen Koordinatenmessgerät an Lagerböcken gelagert sein können. Es ist hiernach bekannt, einen Schlitten über drei Lagerpunkte an einem Lagerbock zu lagern, wobei die Lagerpunkte an einer oberen und unteren Führungsfläche des Lagerbocks angreifen und eine Ebene senkrecht zur Messtischebene aufspannen.

Es ist eine Aufgabe der vorliegenden Erfindung, ein Koordinatenmessgerät der eingangs genannten Art anzugeben, mit dem noch höhere Messgenauigkeiten erreichbar sind.

Diese Aufgabe wird gemäß einem Aspekt der Erfindung durch ein Koordinatenmessgerät der eingangs genannten Art gelöst, bei dem die Schlitten an den senkrechten Führungsflächen der Lagerböcke jeweils über zumindest drei, vorzugsweise über zumindest vier getrennte Lagerpunkte gelagert sind, die eine Ebene senkrecht zur Tischebene aufspannen.

Abweichend hiervon sind die Schlitten bei dem bekannten Koordinatenmessgerät jeweils nur über zwei Lagerpunkte an den senkrechten Führungsflächen der Lagerböcke gelagert, wobei die zwei Lagerpunkte auf einer Geraden parallel zur jeweiligen Bewegungsrichtung des Schlittens liegen. Die Bereitstellung eines dritten und vorzugsweise eines vierten Lagerpunktes, die eine Ebene senkrecht zur Tischebene aufspannen, erhöht demgegenüber die Stabilität und damit die Führungsgenauigkeit. Praktische Versuche haben gezeigt, dass die Messgenauigkeit auf diese Weise noch weiter gesteigert werden kann, da sich der Sondenhalter noch exakter im Messvolumen positionieren lässt. Vor allem die Wiederholgenauigkeit beim wiederholten Anfahren ein und desselben Messpunktes wird durch das geänderte Lagerkonzept gesteigert.

Die genannte Aufgabe ist damit vollständig gelöst.

In einer bevorzugten Ausgestaltung besitzt jeder Lagerbock eine schlitzförmige Öffnung, durch die einer der Balken hindurchragt, wobei die Lagerpunkte außerhalb einer von der schlitzförmigen Öffnung aufgespannten Ebene liegen.

Diese Ausgestaltung ermöglicht es, die Balken "innerhalb" der Lagerböcke zu führen, wie dies an sich bereits auch von dem eingangs beschriebenen Koordinatenmessgerät bekannt ist. Durch die Verlagerung der Lagerpunkte aus der von den schlitzförmigen Öffnungen aufgespannten Ebene heraus kann jedoch ein größerer Bewegungshub und damit verbunden ein größeres Messvolumen realisiert werden, ohne dass die erreichbare Messgenauigkeit spürbar beeinträchtigt wird. Damit ist eine noch höhere relative Genauigkeit bezogen auf das Messvolumen erreichbar.

In einer weiteren Ausgestaltung liegt zumindest ein Lagerpunkt auf jeder Seite der von der schlitzförmigen Öffnung aufgespannten Ebene.

Durch diese Ausgestaltung wird erreicht, dass sowohl oberhalb als auch unterhalb jedes Balkens zumindest ein Lagerpunkt vorhanden ist, der den Schlitten am Lagerbock führt. Dadurch wird die Positioniergenauigkeit weiter verbessert, und zwar insbesondere dann, wenn der entsprechende Balken einen großen Bewegungshub in seiner Verschieberichtung ausführt. Die erreichbare Messgenauigkeit ist daher in dieser Ausgestaltung noch höher, und zwar selbst bei einem im Vergleich zum bisher bekannten Ansatz vergrößerten Messvolumen.

In einer weiteren Ausgestaltung ist jeder Schlitten über zumindest einen Lagerpunkt, vorzugsweise zumindest zwei getrennte Lagerpunkte, auf einer der oberen Führungsflächen in vertikaler Richtung abgestützt ist.

Diese Ausgestaltung ermöglicht es, die Schlitten "schwebend" an den Lagerböcken anzuordnen, d.h. ohne eine weitere Abstützung auf dem Tisch. Die Schlitten sind dann vom Tisch entkoppelt. Im Gegensatz dazu sind die Schlitten bei dem bekannten Koordinatenmessgerät sowohl an den Lagerböcken als auch auf dem Tisch abgestützt. Die hier bevorzugte Ausgestaltung ermöglicht eine zumindest gleich hohe Führungs- und Messgenauigkeit mit einem geringeren Herstellungsaufwand.

In einer weiteren Ausgestaltung ist der Sondenhalter an einer Plattform angeordnet, die mit dem ersten und zweiten Balken verbunden ist und sich über zumindest ein, vorzugsweise drei weitere Lager auf dem Tisch abstützt, wobei zu jedem weiteren Lager ein an der Unterseite des Tisches angreifendes Gegenlager vorhanden ist. Besonders bevorzugt ist es dabei, wenn jedes Lager und sein zugehöriges Gegenlager achsgleich auf einer senkrecht zum Tisch verlaufenden Achse angeordnet sind.

Bei dem bekannten Koordinatenmessgerät ist die Plattform zwar auch über drei Lager auf dem Tisch abgestützt, im Unterschied zur hiesigen Ausgestaltung ist auf der Unterseite des Tisches jedoch nur ein zentrales Gegenlager vorgesehen. Die hier bevorzugte Ausgestaltung ermöglicht demgegenüber eine noch exaktere Führung und daher eine nochmals erhöhte Messgenauigkeit. Darüber hinaus kann diese Ausgestaltung leichter und kleinbauender realisiert werden, was eine höhere Messgeschwindigkeit ohne Nachteile in Bezug auf die Messgenauigkeit ermöglicht. In einer weiteren Ausgestaltung weist der Tisch unterhalb der Lagerböcke Ausnehmungen auf, und jedes weitere Lager ist mit einem Gegenlager über einen durch die Ausnehmungen geführten Bügel verbunden.

Im Gegensatz dazu sind die drei Lager der Plattform bei dem bekannten Koordinatenmessgerät über eine um den Tisch herumgreifende Tragvorrichtung mit dem zentralen Gegenlager verbunden. Die hier bevorzugte Ausgestaltung ist wesentlich leichter und kleinbauender und ermöglichst daher bei zumindest gleicher Messgenauigkeit höhere Messgeschwindigkeiten.

In einer weiteren Ausgestaltung sind die Gegenlager über Traversen miteinander verbunden.

Diese Ausgestaltung führt bei geringem Zusatzgewicht zu einer nochmals verbesserten Führungsgenauigkeit und infolgedessen zu einer noch höheren Messgenauigkeit.

In einer weiteren Ausgestaltung besitzt das neue Koordinatenmessgerät eine Pinole mit einem Antrieb für eine Längsverschiebung in einer dritten Richtung sowie ein Messsystem zum Bestimmen einer Längsposition der Pinole in der dritten Richtung, ferner eine Vielzahl von Pinolenlagern, die die Position der Pinole senkrecht zur dritten Richtung festlegen, wobei der Antrieb und das Messsystem im gleichen Quadranten eines gedachten Koordinatensystems angeordnet sind, dessen Ursprung im Schwerpunkt der Pinole liegt und dessen Achsen parallel zu Ebenen verlaufen, die von den Pinolenlagern aufgespannt werden.

Während sich die bislang beschriebenen Ausgestaltungen vorrangig auf die Führungsgenauigkeit in den beiden ersten Bewegungsrichtungen auswirken, erhöht diese Ausgestaltung vor allem die Führungsgenauigkeit in der dritten Koordinatenrichtung. Die beschriebene Anordnung des Antriebs und des Messsystems im gleichen Quadranten des gedachten Koordinatensystems hat zur Folge, dass das Messsystem die Position der Pinole exakter und toleranter gegenüber statischen und dynamischen Einflüssen bestimmen kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, solange sie den Rahmen der in den Patentansprüchen definierten Erfindung nicht verlassen.

Ausführungsbeispiele der Erfindung sind in der Zeichnung dargestellt und werden in der nachfolgenden Beschreibung näher erläutert. Es zeigen:

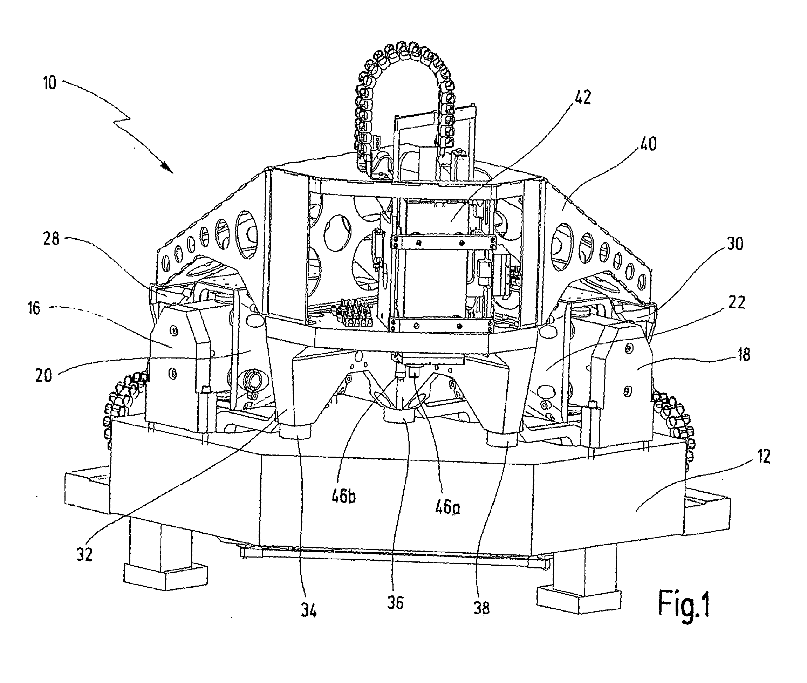

- Fig. 1: eine perspektivische Darstellung des neuen Koordinatenmessgerätes in einer Ansicht von vorne,

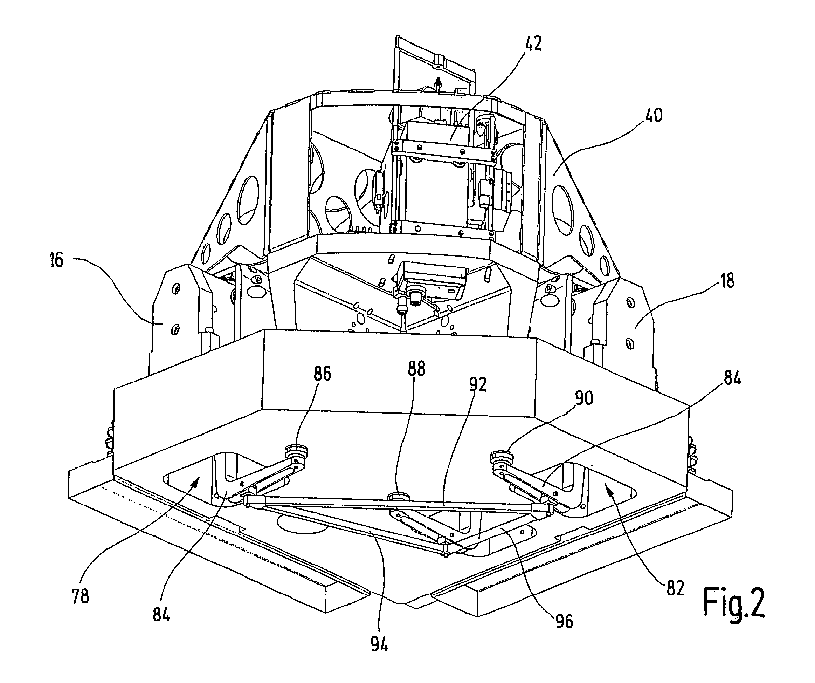

- Fig. 2: das Koordinatenmessgerät aus Fig. 1 in einer Ansicht von schräg unten, wobei Stützfüße des Tisches aus Gründen der Übersichtlichkeit nicht gezeigt sind,
- Fig. 3: das Koordinatenmessgerät aus Fig. 1 in einer Ansicht von schräg oben, wobei einige Teile zur besseren Übersichtlichkeit nicht gezeigt sind,
- Fig. 4: die Lagerböcke und Schlitten des Koordinatenmessgerätes gemäß Fig. 3 in einer teilweise geschnittenen Darstellung, und
- Fig. 5: die Pinole des Koordinatensystems aus Fig. 1 in einer Draufsicht von oben.

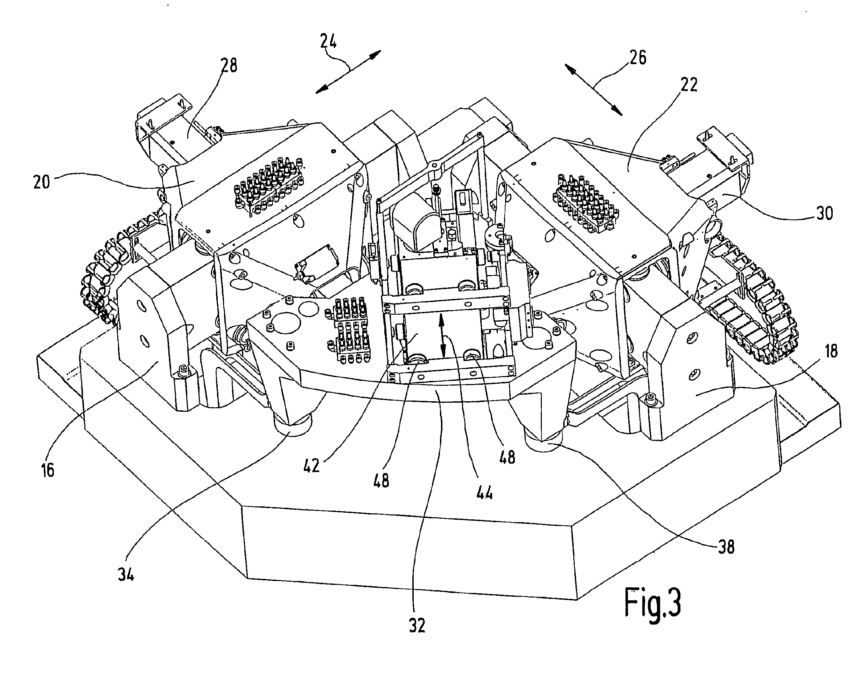

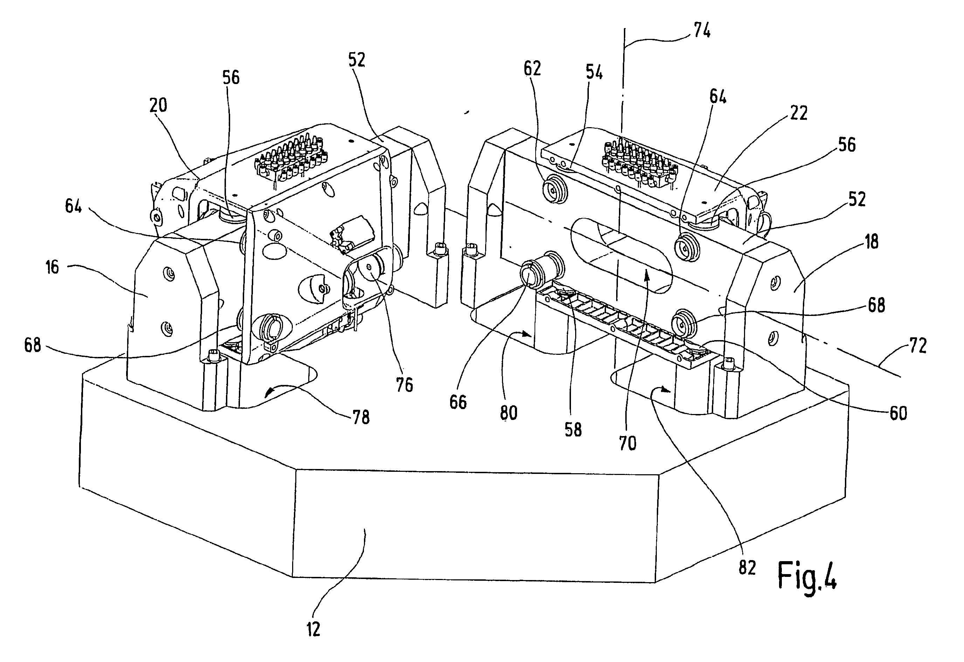

In den Figuren ist ein Ausführungsbeispiel des neuen Koordinatenmessgerätes in seiner Gesamtheit mit der Bezugsziffer 10 bezeichnet. Das Koordinatenmessgerät 10 besitzt einen Tisch 12, der vorzugsweise aus Granit hergestellt ist. Auf der Oberseite des Tisches 12 sind zwei Lagerböcke 16 und 18 V-förmig zueinander angeordnet, und zwar im bevorzugten Ausführungsbeispiel in einem rechten Winkel zueinander. Letzteres ist jedoch für die Realisierung der vorliegenden Erfindung nicht zwingend erforderlicht. Auf jedem der Lagerböcke 16, 18 ist ein Schlitten 20, 22 gelagert, wie dies am besten in den Figuren 3 und 4 zu sehen ist. Der Schlitten 20 ist in Richtung eines Pfeils 24 längsverschieblich, der Schlitten 22 ist in Richtung eines Pfeils 26 längsverschieblich. Die Richtungen 24, 26 sind die X- und Y-Richtung für das Koordinatenmessgerät 10.

Jeder Schlitten 20, 22 trägt einen Balken 28, 30, der am besten in Fig. 3 zu erkennen ist. Der Balken 28 verläuft parallel zum Lagerbock 18 und ist in Richtung des Pfeils 26 längsverschieblich. Der Balken 30 verläuft parallel zum Lagerbock 16 und ist in Richtung des Pfeils 24 längsverschieblich. Die beiden Balken 28, 30 sind damit ebenfalls V-förmig zueinander angeordnet, wobei die beiden V-förmigen Strukturen aus Lagerböcken 16, 18 und Balken 28, 30 mit ihren freien Enden jeweils aufeinander zu weisen bzw. ineinander "gesteckt" sind.

Die aufeinander zu weisenden freien Enden der Balken 28, 30 sind an einer Plattform 32 befestigt, die ihrerseits über Lager 34, 36, 38 auf der Oberseite des Tisches 12 abgestützt ist. Durch die Längsverschieblichkeit der Schlitten 20, 22 und Balken 28, 30 ist die Plattform 32 in den Richtungen 24, 26 auf dem Tisch 12 verschieblich.

Die Plattform 32 besitzt an ihrer Oberseite eine dachförmige Haube 40, die die Lagerböcke 16, 18 und Schlitten 20, 22 überragt und sich auf den äußeren freien Enden der Balken 28, 30 abstützt. Die Haube 40 ist aus Aluminiumblechen hergestellt, die zahlreiche Löcher aufweisen, um das Gewicht der Haube 40 zu reduzieren. Sie dient zur Versteifung der aus den Balken 28, 30 und der Plattform 32 bestehenden Anordnung.

Die drei Lager 34, 36, 38 der Plattform 32 bilden die Eckpunkte eines etwa gleichseitigen Dreiecks. Oberhalb dieses Dreiecks ist eine Pinole 42 an der Plattform 32 angeordnet. Die Pinole 42 ist in Richtung eines Pfeils 44 längsverschieblich (Fig. 3), wobei diese Richtung senkrecht zur Tischebene 12 ist und somit die Z-Richtung darstellt.

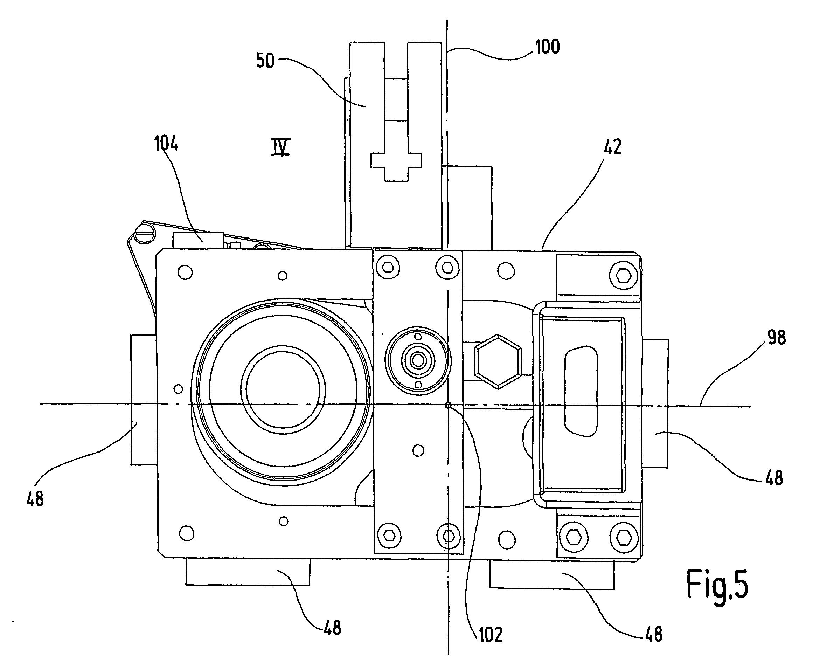

Am unteren freien Ende der Pinole 42 ist ein Sondenhalter 46 zum Aufnehmen einer Messsonde angeordnet. In dem hier gezeigten Ausführungsbeispiel besitzt das Koordinatenmessgerät 10 sogar zwei Sondenhalter 46, nämlich einen ersten Sondenhalter 46a für einen taktilen Tastkopf und einen zweiten Sondenhalter 46b für ein optisches Messsystem. Die Pinole 42 ist über insgesamt 8 Luftlager 48 gelagert, die an drei jeweils planen Außenseiten der Pinole 42 anliegen (vgl. Fig. 5). An der vierten Außenseite befindet sich der Schlitten eines Linearantriebs 50, wie nachfolgend anhand Fig. 5 noch näher erläutert ist.

Wie in der teilweise geschnittenen Darstellung der Fig. 4 zu erkennen ist, besitzt jeder Lagerbock 16, 18 einen quaderförmigen Teil, auf dem der jeweils zugehörige Schlitten 20, 22 entlang gleitet. Dabei umgreift jeder Schlitten 20, 22 den quaderförmigen Teil hülsenartig und stützt sich auf einer oberen Führungsfläche 52 über jeweils zwei getrennt voneinander angeordnete Lager 54, 56 ab. Auf der parallelen unteren Führungsfläche des quaderförmigen Teils befinden sich zwei Gegenlager 58, 60, und zwar achsgleich unterhalb der Lager 54, 56.

Des Weiteren ist jeder Schlitten 20, 22 über vier Lager 62, 64, 66, 68 und vier jeweils achsgleiche Gegenlager auf den senkrechten Führungsflächen des zugehörigen quaderförmigen Teils abgestützt. Alle genannten Lager sind Luftlager, wobei das Lager 66 in der teilweise geschnittenen Darstellung in Fig. 4 noch mit seinem zugehörigem Anschluss gezeigt ist. In dem bevorzugten Ausführungsbeispiel sind die Lager 62, 64, 66, 68 jedes Schlittens 20, 22 als Festlager ausgebildet, während die in Fig. 4 nicht zu erkennenden achsgleichen Gegenlager Loslager bilden.

Fig. 4 zeigt des Weiteren, dass die quaderförmigen Teile der Lagerböcke 16, 18 jeweils eine horizontale, schlitzförmige Öffnung 70 besitzen, der in der Darstellung in Fig. 4 allerdings nur beim Lagerbock 18 sichtbar ist. Durch die schlitzförmigen Öffnungen 70 erstrecken sich die Balken 28, 30, wobei die Öffnung 70 eine Verschiebung der Schlitten 20, 22 senkrecht zu dem jeweiligen Balken 28, 30 ermöglicht.

Die schlitzförmigen Öffnungen 70 spannen eine horizontale Ebene 72 (bzw. ein horizontales Raumvolumen mit der Höhe der Öffnungen) auf, und die Lager 62, 64, 66, 68 sind so angeordnet, dass sie außerhalb der Ebene 72 bzw. außerhalb des Raumvolumens liegen. Tatsächlich sind die Lager 62, 64 (mit ihren jeweiligen Gegenlagern) oberhalb der Ebene 72 angeordnet, während die Lager 66, 68 unterhalb der Ebene 72 liegen. Dabei spannen die Lager 62-68 (und ihre entsprechenden Gegenlager) eine Lagerebene 74 auf, die senkrecht zur Ebene 72 und senkrecht zur Tischebene 12 liegt.

Die Balken 28, 30 sind in den Schlitten 20, 22 ebenfalls durch Luftlager abgestützt, von denen in Fig. 4 eines mit der Bezugsziffer 76 bezeichnet ist.

Unterhalb des Lagerbocks 16 besitzt der Tisch 12 eine Ausnehmung 78 und unterhalb des Lagerbocks 18 zwei weitere Ausnehmungen 80, 82 angeordnet. Durch die Ausnehmungen 78, 80, 82 sind C-förmige Bügel 84 geführt, die den Tisch 12 oben und unten umgreifen. Das obere freie Ende jedes Bügels 84 ist mit der Plattform 32 verbunden, und zwar im Bereich der Lager 34, 36, 38. Das untere freie Ende jedes Bügels 84 trägt ein Gegenlager 86, 88 bzw. 90. Dabei ist das Gegenlager 86 achsgleich unterhalb des Lagers 34 angeordnet, während die Gegenlager 88, 90 jeweils achsgleich unter den Lagern 36, 38 sitzen. Des Weiteren sind die unteren freien Enden der Bügel 84 über drei Traversen 92, 94, 96 miteinander verbunden.

Das Koordinatenmessgerät 10 besitzt damit sowohl in Bezug auf die Lagerung der Schlitten 20, 22 als auch in Bezug auf die Lagerung der Plattform 32 ein anderes Lagerkonzept als das Koordinatenmessgerät aus der eingangs genannten Dissertation. Damit lässt sich das neue Koordinatenmessgerät 10 bei höherer maximal erreichbarer Messgenauigkeit wirtschaftlicher herstellen.

Eine weitere Verbesserung gegenüber dem bekannten Koordinatenmessgerät wird aus Fig. 5 ersichtlich. Dort ist die in Z-Richtung bewegliche Pinole 42 in einer Draufsicht von oben dargestellt. Zusätzlich ist ein Koordinatensystem mit zwei Achsen 98, 100 eingezeichnet, dessen Ursprung im Schwerpunkt der Pinole 42 liegt. Das Koordinatensystem bildet vier Quadranten aus, wobei die Anordnung der Pinole 42 so gewählt ist, dass der Linearantrieb 50 und das Messsystem (hier mit Bezugsziffer 104 bezeichnet) zum Bestimmen der vertikalen Z-Position im selben Quadranten IV angeordnet sind. Wie bereits eingangs erwähnt, wird hierdurch eine höhere Messgenauigkeit ermöglicht.

## Patentansprüche

1. Koordinatenmessgerät zum messtechnischen Bestimmen einer Messkoordinate an einem Messobjekt, mit
- einem Tisch (12) zum Aufspannen des Messobjekts,
- einem Sondenhalter (46) zum Aufnehmen einer Messsonde, insbesondere eines Tastkopfes,
- einem ersten Lagerbock (16) mit einer oberen Führungsfläche (52) und zwei senkrechten Führungsflächen, auf denen ein erster Schlitten (20) in einer ersten Richtung (24) längsverschieblich gelagert ist,
- einem zweiten Lagerbock (18) mit einer oberen Führungsfläche (52) und zwei senkrechten Führungsflächen, auf denen ein zweiter Schlitten (22) in einer zweiten Richtung (24) längsverschieblich gelagert ist, und
- einem ersten und einem zweiten Balken (28, 30), die jeweils mit dem Sondenhalter (46) gekoppelt sind,
- wobei der erste Balken (28) parallel zu dem zweiten Lagerbock (18) verläuft und an dem ersten Schlitten (20) in der zweiten Richtung (24) längsverschieblich angeordnet ist, und
- wobei der zweite Balken (30) parallel zu dem ersten Lagerbock (16) verläuft und an dem zweiten Schlitten (22) in der ersten Richtung (24) längsverschieblich angeordnet ist,
**dadurch gekennzeichnet, dass** die Schlitten (20, 22) an den senkrechten Führungsflächen der Lagerböcke (16, 18) jeweils über zumindest drei, vorzugsweise vier getrennte Lagerpunkte (62-68) gelagert sind, die eine Ebene (74) senkrecht zur Tischebene aufspannen.

2. Koordinatenmessgerät nach Anspruch 1, **dadurch gekennzeichnet, dass** jeder Lagerbock (16, 18) eine schlitzförmige Öffnung (70) aufweist, durch die einer der Balken (28, 30) hindurchragt, wobei die Lagerpunkte (62-68) außerhalb einer von der schlitzförmigen Öffnung (70) aufgespannten Ebene (72) liegen.

3. Koordinatenmessgerät nach Anspruch 2, **dadurch gekennzeichnet, dass** zumindest ein Lagerpunkt (62-68) auf jeder Seite der von der schlitzförmigen Ausnehmung (70) aufgespannten Ebene (72) liegt.

4. Koordinatenmessgerät nach einem der Ansprüche 1 bis 3, **dadurch gekennzeichnet, dass** jeder Schlitten (20, 22) über zumindest einen Lagerpunkt (54, 56), vorzugsweise zumindest zwei getrennte Lagerpunkte, auf einer der oberen Führungsflächen in vertikaler Richtung abgestützt ist.

5. Koordinatenmessgerät nach einem der Ansprüche 1 bis 4, **dadurch gekennzeichnet, dass** der Sondenhalter (46) an einer Plattform (32) angeordnet ist, die mit dem ersten und zweiten Balken (28, 30) verbunden ist und sich über zumindest ein, vorzugsweise drei weitere Lager (34, 36, 38) auf dem Tisch (12) abstützt, wobei zu jedem weiteren Lager (34, 36, 38) ein an der Unterseite des Tisches (12) angreifendes Gegenlager (86, 88, 90) vorhanden ist.

6. Koordinatenmessgerät nach Anspruch 5, **dadurch gekennzeichnet, dass** der Tisch (12) im Bereich der Lagerböcke (16, 18) Ausnehmungen (78, 80, 82) aufweist und dass jedes weitere Lager (34, 36, 38) mit einem Gegenlager (86, 88, 90) über einen durch die Ausnehmungen (78, 80, 82) geführten Bügel (84) verbunden ist.

7. Koordinatenmessgerät nach Anspruch 5 oder 6, **dadurch gekennzeichnet, dass** die Gegenlager (86, 88, 90) über Traversen (92, 94, 96) miteinander verbunden sind.

8. Koordinatenmessgerät nach einem der Ansprüche 1 bis 7, **gekennzeichnet durch** eine Pinole (42) mit einem Antrieb (50) für eine Längsverschiebung in einer dritten Richtung (44) und mit einem Messsystem (104) zum Bestimmen einer Längsposition der Pinole (42) in der dritten Richtung (44), ferner mit einer Vielzahl von Pinolenlagern (48), die die Position der Pinole (42) senkrecht zur dritten Richtung (44) festlegen, wobei der Antrieb (50) und das Messsystem (104) im gleichen Quadranten (IV) eines gedachten Koordinatensystems angeordnet sind, dessen Ursprung (102) im Schwerpunkt der Pinole (42) liegt und dessen Achsen (98, 100) parallel zu Ebenen verlaufen, die von den Pinolenlagern (48) aufgespannt werden.

## Claims

1. A coordinate measuring machine for the metrological determination of a measurement coordinate on a test object, comprising
- a table (12) for mounting the test object,
- a probe holder (46) for receiving a measuring probe, in particular a touch probe,
- a first bearing support (16) having an upper guide surface (52) and two vertical guide surfaces, on which a first carriage (20) is mounted moveably in a first longitudinal direction (24),
- a second bearing support (18) having an upper guide surface (52) and two vertical guide surfaces, on which a second carriage (22) is mounted moveably in a second longitudinal direction (24), and
- a first and a second beam (28, 30), each of which being coupled to the probe holder (46),
- with the first beam (28) extending parallel to the second bearing support (18) and being arranged on the first carriage (20) such that it can be displaced longitudinally in the second direction (24), and
- with the second beam (30) extending parallel to the first bearing support (16) and being arranged on the second carriage (22) such that it can be displaced longitudinally in the first direction (24),
**characterized in that** the carriages (20, 22) are mounted on vertical guide surfaces of the bearing supports (16, 18) in each case via at least three, preferably four separate bearing points (62-68), which define a plane (74) perpendicular to the plane of the table.

2. The coordinate measuring machine of claim 1, **characterized in that** each bearing support (16, 18) has a slot-shaped opening (70), through which one of the beams (28, 30) projects, wherein the bearing points (62-68) lie outside of a plane (72) defined by the slot-shaped opening (70).

3. The coordinate measuring machine of claim 2, **characterized in that** at least one bearing point (62-68) lies on either side of the plane (72) defined by the slot-shaped recess (70).

4. The coordinate measuring machine of one of claims 1 to 3, **characterized in that** each carriage (20, 22) is vertically supported via at least one bearing point (54, 56), preferably via at least two separate bearing points, on one of the upper guide surfaces.

5. The coordinate measuring machine of one of claims 1 to 4, **characterized in that** the probe holder (46) is arranged on a platform (32), which is connected to the first and second beam (28, 30) and is supported on the table (12) via at least one, preferably three further bearings (34, 36, 38), wherein for each further bearing (34, 36, 38) there is a counter bearing (86, 88, 90) which bears against the underside of the table (12).

6. The coordinate measuring machine of claim 5, **characterized in that** the table (12) has recesses (78, 80, 82) in the region of the bearing supports (16, 18), and each further bearing (34, 36, 38) is connected to a counter bearing (86, 88, 90) via a frame (84) that passes through the recesses (78, 80, 82).

7. The coordinate measuring machine of claim 5 or 6, **characterized in that** the counter bearings (86, 88, 90) are connected together by cross ties (92, 94, 96).

8. The coordinate measuring machine of one of claims 1 to 7, **characterized by** a quill (42) having a drive (50) for longitudinal displacement in a third direction (44) and having a measuring system (104) for determining a longitudinal position of the quill (42) in the third direction (44), further having a plurality of quill bearings (48), which define the position of the quill (42) perpendicularly to the third direction (44), wherein the drive (50) and the measuring system (104) are arranged in the same quadrant (IV) of an imaginary coordinate system having its origin (102) at the center of gravity of the quill (42) and having its axes (98, 100) extending parallel to the planes that are defined by the quill bearings (48).

## Revendications

1. Dispositif de mesure de coordonnées servant à déterminer métrologiquement une coordonnée de mesure sur un objet de mesure, avec
- un plateau (12) pour serrer l'objet de mesure,
- un support de sonde (46) pour loger une sonde de mesure, en particulier un palpeur,
- un premier bloc de palier (16) avec une surface de guidage supérieure (52) et deux surfaces de guidage perpendiculaires, sur lesquelles un premier chariot (20) est logé de façon à pouvoir coulisser longitudinalement dans un premier sens (24),
- un deuxième bloc de palier (18) avec une surface de guidage supérieure (52) et deux surfaces de guidage perpendiculaires, sur lesquelles un deuxième chariot (22) est logé de façon à pouvoir coulisser longitudinalement dans un deuxième sens (24), et
- une première et une deuxième poutres (28, 30), qui sont chacune accouplées avec le support de sonde (46),
- la première poutre (28) s'étendant parallèlement au deuxième bloc de palier (18) et étant disposée sur le premier chariot (20) de façon à pouvoir coulisser longitudinalement dans le deuxième sens (24), et
- la deuxième poutre (30) s'étendant parallèlement au premier bloc de palier (16) et étant disposée sur le deuxième chariot (22) de façon à pouvoir coulisser longitudinalement dans le premier sens (24),
**caractérisé en ce que** chacun des chariots (20, 22) est logé sur les surfaces de guidage perpendiculaires des blocs de palier (16, 18) par au moins trois, de préférence quatre points, d'appui (62-68) qui définissent un plan (74) perpendiculaire au plan du plateau.

2. Dispositif de mesure de coordonnées selon la revendication 1, **caractérisé en ce que** chaque bloc de palier (16, 18) présente une ouverture (70) en forme de fente par laquelle sort une des poutres (28, 30), les points d'appui (62-68) étant situés en dehors d'un plan (72) défini par l'ouverture (70) en forme de fente.

3. Dispositif de mesure de coordonnées selon la revendication 2, **caractérisé en ce que** au moins un point d'appui (62-68) est situé de chaque côté du plan (72) défini par l'évidement (70) en forme de fente.

4. Dispositif de mesure de coordonnées selon l'une des revendications 1 à 3, **caractérisé en ce que** chaque chariot (20, 22) est appuyé sur une des surfaces de guidage supérieures dans le sens vertical par l'intermédiaire d'au moins un point d'appui (54, 56), de préférence au moins deux points d'appui séparés.

5. Dispositif de mesure de coordonnées selon l'une des revendications 1 à 4, **caractérisé en ce que** le support de sonde (46) est disposé sur une plate-forme (32), qui est reliée à la première et à la deuxième poutre (28, 30) et s'appuie sur le plateau (12) par l'intermédiaire d'au moins un, de préférence trois, palier(s) supplémentaire(s) (34, 36, 38), une butée (86, 88, 90) agissant sur le dessous du plateau (12) étant disponible pour chaque palier supplémentaire (34, 36, 38).

6. Dispositif de mesure de coordonnées selon la revendication 5, **caractérisé en ce que** le plateau (12) présente des évidements (78, 80, 82) dans la région des blocs de palier (16, 18) et **en ce que** chaque palier supplémentaire (34, 36, 38) est relié à une butée (86, 88, 90) par un étrier (84) passant par les évidements (78, 80, 82).

7. Dispositif de mesure de coordonnées selon la revendication 5 ou 6, **caractérisé en ce que** les butées (86, 88, 90) sont reliées les unes aux autres par des traverses (92, 94, 96).

8. Dispositif de mesure de coordonnées selon l'une des revendications 1 à 7, **caractérisé par** un fourreau (42) avec un entraînement (50) pour un déplacement longitudinal dans un troisième sens (44) et avec un système de mesure (104) permettant de déterminer une position longitudinale du fourreau (42) dans le troisième sens (44), avec également une multitude de paliers de fourreau (48), qui définissent la position du fourreau (42) perpendiculairement au troisième sens (44), l'entraînement (50) et le système de mesure (104) étant disposés dans le même quadrant (IV) d'un système de coordonnées imaginaire, dont l'origine (102) est située au centre de gravité du fourreau (42) et dont les axes (98,100) s'étendent parallèlement aux plans qui sont définis par les paliers de fourreau (48).
